# EUROPÄISCHE PATENTANMELDUNG

(11) **EP 4 494 902 A1**
(43) Veröffentlichungstag der Anmeldung: **22.01.2025**
(21) Anmeldenummer: 24189741.2
(22) Anmeldetag: 19.07.2024
(51) Int. Cl.: B60G 17/019, G01G 19/08, G01G 19/12

(54) **FAHRZEUGANHÄNGER MIT EINEM SENSOR ZUR MESSUNG UND/ODER ERMITTLUNG DER DURCH DIE LADUNG AUF DIE ACHSE DES FAHRZEUGANHÄNGERS WIRKENDEN ACHSLAST**

(30) Priorität: 21.07.2023 DE 102023119404
(71) Anmelder: Firma iQnexxt.solutions GmbH, 53879 Euskirchen (DE)
(72) Erfinder: Finken, Manuel, 53879 Euskirchen (DE)
(74) Vertreter: Limbeck, Achim

(57) **Zusammenfassung**

Die vorliegende Erfindung bezieht sich auf einen Fahrzeuganhänger mit einer Ladefläche zur Beförderung von Gütern, einer Zugdeichsel zum Ankuppeln an ein Zugfahrzeug, mindestens einer Achse (A) mit Rädern sowie einem Sensor (10, 10a, 10b) zur Messung und/oder Ermittlung der durch die Ladung auf die Achse des Fahrzeuganhängers wirkenden Achslast, wobei der Fahrzeuganhänger ferner mindestens eine Einrichtung zur Übermittlung des durch den Sensor (10, 10a, 10b) ermittelten Signals umfasst, um dieses Signal an eine digitale Auswerteeinheit zu übermitteln, welche ausgebildet ist, entweder mittels Zustandserkennung oder Messwertanalyse der Achslast einen Überladungszustand des Fahrzeuganhängers zu ermitteln und/oder auszuwerten und den Überladungszustand an mindestens eine Empfangseinheit weiterzuleiten. Der Fahrzeuganhänger dadurch gekennzeichnet, dass der Sensor (10, 10a, 10b) ein Bewegungs- und/oder Positionssensor ist, der ausgebildet ist, eine vertikale Bewegung, Drehung und/oder Rotation a) der Achse (A) und/oder b) des Achsdrehpunkts (12) und/oder c) einer mit der Achse (A) oder dem Achskörper (11) verbundenen, beweglichen, drehenden oder rotierenden Komponente (13, 14) zu erfassen.

## Beschreibung

### Technisches Gebiet

Die vorliegende Erfindung betrifft einen Fahrzeuganhänger mit einem Sensor zur Messung und/oder Ermittlung der durch die Ladung auf die Achse des Fahrzeuganhängers wirkenden Achslast gemäß dem Oberbegriff des Patentanspruchs 1.

Insbesondere dient die vorliegende Erfindung der Feststellung des Beladungszustandes eines PKW-Anhängers mit gefederter Achse durch Messung der Einfeder- und Ausfederwege im geparkten oder bewegten Zustand und die Ermittlung der daraus resultierenden Achsdrehpunktpositionen zur Feststellung kritischer Messpunkte und Weitervermittlung der Werte mittels Funkübertragung durch ein Telematikmodul über das Mobilfunknetz an einen zentralen Telematikdienst.

Die Überladungserkennung findet vorzugsweise Anwendung in der Fahrzeugvermietung (Anhängervermietung) von PKW-Anhängern und bei der Serienausrüstung von PKW-Anhängern durch Hersteller im Werk, ist dabei aber nicht auf PKW-Anhänger begrenzt, sondern kann auch bei gefederten Anhängern jeder Gewichtsklasse oder Fahrzeugklasse eingesetzt werden.

### Stand der Technik

Bisher werden Messdaten zu Überladung, Fahrverhalten, dynamische Federwege usw. noch von keinem Hersteller im PKW-Anhängerbereich erfasst.

Die Überladung von PKW-Anhängern ist ein allgemeines Problem für Vermieter und Hersteller, da diese oft nur schwer nachzuweisen ist. Die Anhängerhersteller haben sich dieser Problematik noch nicht gewidmet, da es so gut wie keinen PKW-Anhänger gibt, der überhaupt eine Telemetrie Datenerfassung in Serie verbaut hat. Bekannte Systeme aus dem LKW-Bereich funktionieren nicht über die Erfassung elektrischer bzw. elektromechanischer Signale, sondern, wenn überhaupt, mit pneumatischen Systemen (Luftbalge) oder über die Erfassung von Kraft- oder Drucksensoren, sogenannten Wägezellen, die bei PKW-Anhängern konstruktionsbedingt und auch aus Kostengründen keine Anwendung finden.

Die Erfassung von Ein- und Ausfederwegen und die damit verbundenen Rückschlüsse auf den Drehpunkt der Radachse sind in der Vergangenheit lediglich im Bereich der Kraftfahrzeugtechnik im klassischen Automobilbau genutzt worden, um damit beispielsweise das Fahrwerk bei Kraftfahrzeugen einzustellen (z.B. bei sogenannter Luftfederung) oder zur Ermittlung des Beladungszustandes des Kraftfahrzeuges, um damit die Scheinwerfer in der Leuchtweite (sogenannte Leuchtweitenregulierung) automatisch einzustellen. Die bis dato verwendete Niveauregulierung hat und hatte aber nicht die Absicht, einen kritischen Beladungszustand zu signalisieren, da dieser bei eigenständig fahrenden Kraftfahrzeugen wie Automobilen weniger kritisch ist als bei Anhängern, die zu reinen Transportzwecken genutzt werden. Die bereits vorhandenen Systeme, die auf die auf die spezifische Lasterfassung und Beladungsmessung abzielen und ausschließlich im Lastkraftwagenbau und Schwerlastverkehr eingesetzt werden, arbeiten über direkte Drucksensorik. Mit Hilfe sogenannter Wägezellen werden hier bereits Beladungszustände erfasst. Diese Art der Erfassung ist aber in Relation zur Positionserfassung der Achse erheblich teurer in der Herstellung und Montage. Einfache und kostengünstige Systeme zur Beladungszustandserfassung werden zum jetzigen Zeitpunkt gerade im PKW-Anhängerbau noch nicht eingesetzt, zumal kein Hersteller derzeit seine Anhänger mit umfangreicherer Elektronik, Telemetrie oder Sensorik ausrüstet.

Nachteile der bis heute nicht vorhandenen Überwachung der Anhängerflotten gerade im Mietbereich sind oftmals schwer dokumentier- oder nachweisbare technische Totalschäden durch Überladung. Für Anhängerhersteller ist es schwer oder gar oft unmöglich eine Überladung nachzuvollziehen, weshalb Garantieansprüche von Käufern schwer nachzuprüfen sind und im Falle der Fahrzeugvermietung entsprechende Ansprüche gegen Mietkunden oft nicht durchgesetzt werden.

Darüber hinaus stellt die Überladung von Anhängern ein signifikantes Verkehrssicherheitsrisiko dar, welches von keinem der Anhängerhersteller bislang Beachtung gefunden hat.

### Darstellung der Erfindung

Der vorliegenden Erfindung liegt die Aufgabe zugrunde, die vorgenannten Nachteile zu beseitigen und einen Fahrzeuganhänger zu schaffen, der ausgebildet ist, eine Beladung des Fahrzeuganhängers einfach zu messen bzw. zu ermitteln.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen des erfindungsgemäßen Fahrzeuganhängers nebst Sensor sind in den abhängigen Unteransprüchen angegeben.

Der erfindungsgemäße Fahrzeuganhänger ist mit einer Ladefläche zur Beförderung von Gütern, einer Zugdeichsel zum Ankuppeln an ein Zugfahrzeug, mindestens einer Achse mit Rädern sowie einem Sensor zur Messung und/oder Ermittlung der durch die Ladung auf die Achse des Fahrzeuganhängers wirkenden Achslast ausgestattet.

Der Fahrzeuganhänger umfasst ferner mindestens eine Einrichtung zur Übermittlung des durch den Sensor ermittelten Signals, um dieses Signal an eine digitale Auswerteeinheit zu übermitteln, welche ausgebildet ist, entweder mittels Zustandserkennung oder Messwertanalyse der Achslast einen Überladungszustand des Fahrzeuganhängers zu ermitteln und/oder auszuwerten und den Überladungszustand an mindestens eine Empfangseinheit weiterzuleiten.

Erfindungsgemäß ist der Fahrzeuganhänger dadurch gekennzeichnet, dass der Sensor ein Bewegungs- und/oder Positionssensor ist, der ausgebildet ist, eine vertikale Bewegung, Drehung und/oder Rotation a) der Achse, und/oder b) des Achsdrehpunkts und/oder c) einer mit der Achse oder dem Achskörper (Achsbrücke) verbundenen, beweglichen, drehenden oder rotierenden Komponente zu erfassen.

Als Komponente kommen vorliegend insbesondere ein oder mehrere Achsschenkel, eine Radaufnahme, eine Blattfeder oder jegliches andere direkt oder indirekt mit der Achse oder dem Achskörper verbundenen (vorzugsweise beweglichen) Bauteils oder (vorzugsweise beweglichen) Komponente an dem Fahrzeuganhänger in Betracht.

In einer vorteilhaften Ausführungsform der Erfindung kann die Beladung kontinuierlich ermittelt werden. Dabei kann es vorteilhaft sein, wenn vorzugsweise bei einer Überschreitung definierter Grenzwerte der Beladung mindestens ein Signale und/oder mindestens eine Information an eine Empfangseinheit eines Empfängers, hier bspw. den Anhängerhersteller, den Vermieter oder den Besitzer eines Anhängers übermittelt wird.

Dabei sendet vorzugsweise eine mit dem Mobilfunknetz verbundene Telemetrieeinheit, die bspw. fest mit dem Anhänger verbunden ist, ein Signal zu einem IT-Dienst, der vorteilhafterweise das Signal auswertet und/oder einen Alarm generiert. Vermieter und Hersteller können somit direkt informiert werden. Potenzielle Mieter können weiterhin in Echtzeit über die Überladung des PKW-Anhängers per App oder E-Mail informiert werden und Folgeschäden abwenden oder Verkehrsrisiken verhindern.

Die Überladeerkennung kann technisch durch eine kontinuierliche Messung vom Beladezustand eines Fahrzeuganhängers und/oder durch eine Ermittlung der dynamischen Einfederwege während der Fahrt oder des statischen Einfederwegs im unbewegten und beladenen oder unbeladenen Zustand durch Feststellung der Überschreitung des Federweges oder die Überschreitung eines vordefinierten Messpunktes eines Achspositionssensors oder Drucksensors realisiert sein.

Dabei kann die Messung der Beladung bei Fahrzeuganhängern, die mit Gummi-gefederter Achse, stoßdämpfergeführter Einzelradaufhängung oder Blattfederung mit oder ohne Stoßdämpfer ausgeführt sind und in jeder anderen Art der Aufhängung, bei der die Einfederwege und Anfangs- und Endpositionen mittels eines elektronischen, widerstandsverändernden, schaltenden oder optischen Sensors oder eines Kontaktschalters ermittelt werden.

Ferner beschreibt die Erfindung ebenso die Ermittlung der einzelnen Achslasten über jedwede Sensorik, die es erlauben, sequenzielle Achslasten durch Positionsensoren zu konsolidieren und mittels Messung und Auswertung der Achslasten eine Überladung (z.B. mittels gemittelter Durchschnittswerte oder durch die Anwendung von künstlicher Intelligenz oder Machine-Learing Algorithmen) feststellen zu können.

### Kurzbeschreibung der Zeichnungen

Weitere Ziele, Merkmale, Vorteile und Anwendungsmöglichkeiten des erfindungsgemäßen Fahrzeuganhängers ergeben sich aus der nachfolgenden Beschreibung eines Ausführungsbeispiels anhand der Zeichnungen.

In den Zeichnungen zeigen
Fig. 1 einen Sensor, mittels dem der Achsdrehpunkt ermittelt wird;
Fig. 2 einen Sensor, der diagonal zur Achse in dem Achskörper montiert ist;
Fig. 3 einen Sensor, mittels dem eine kontinuierliche Messung der Achsposition erfolgt;
Fig. 4 einen weiteren Sensor, mittels dem der Achsdrehpunkt ermittelt wird;
Fig. 5 einen Sensor, der in etwa mittig am Fahrzeuganhänger im Bereich des Achskörpers montiert ist.

### Kurzbeschreibung der Zeichnungen

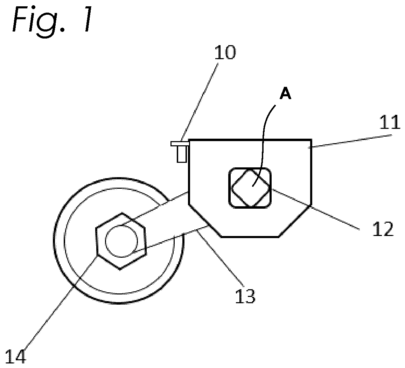

Wie aus Fig. 1 ersichtlich, erfolgt die Ermittlung des Achsdrehpunktes und einer Überladung vorzugsweise durch senkrecht und nahe zur Achse oder senkrecht und nahe zum Achsschenkel montierten Magnetfeldsensor, Reed-Kontakt, Ultraschallsensor oder anderer elektronischer Näherungssensor.

Der Sensor 10, 10a, 10b ist vorzugsweise ausgebildet, den Achsdrehpunkt 12 durch senkrecht zur Achse A oder senkrecht zum Achsschenkel 13 montierten Magnetfeldsensor, Reed-Kontakt, Ultraschallsensor oder anderer elektronischer Näherungssensor zu ermitteln.

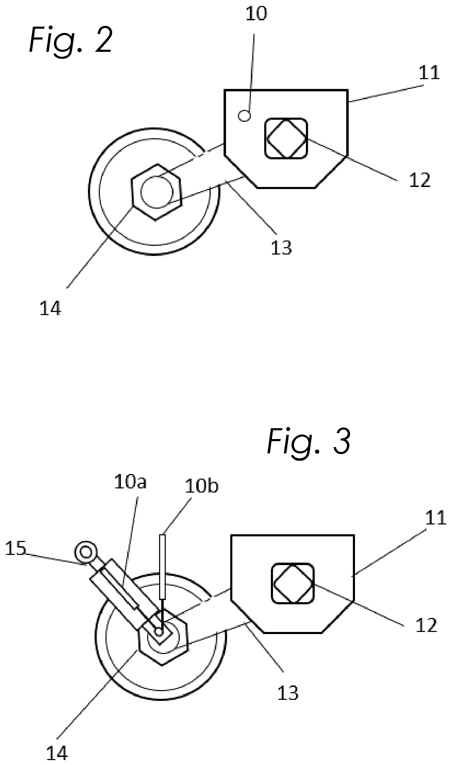

In der in Fig. 2 dargestellten Ausführungsform der Erfindung ist der Sensor 10, 10a, 10b vorzugsweise ein Magnetfeldsensor, der diagonal zur Achse in dem Achskörper 11 montiert ist, ein Reed-Kontakt, ein Ultraschallsensor und/oder ein anderer elektronischer Näherungssensor zur Ermittlung der Achsschenkelposition dient.

Der Sensor 10, 10a, 10b löst vorzugsweise aus, sobald der Achsschenkel eine definierte (kritische) Position erreicht hat.

Darüber hinaus kann eine Ermittlung eines definierten (kritischem) Achsdrehpunkts und eine Überladung mittels eines senkrecht zur Achse und zum Achsschenkel positioniertem Magnetfeldsensor erfolgen.

Fig. 3 zeigt eine Ausführungsform der Erfindung, bei der der Sensor 10, 10a, 10b ausgebildet ist, eine kontinuierliche Messung der Achsposition und/oder eine Feststellung einer Überladung durch die Messung des Ein- und/oder Ausfederweges mittels eines Linearsensors oder durch Messung von definierten (kritischen) Positionen (max. Ein-/Ausfederweg) durchzuführen. Dabei wird vorzugsweise ein Signal generiert und ausgelöst bzw. übermittelt. Die Montage erfolgt entweder in Stoßdämpferlage 10a oder senkrecht zur Achse 10b und misst den Federweg des Stoßdämpfers oder der Achse. Die Ermittlung des Achsdrehpunkts und demgemäß eine Überladung kann dabei vorzugsweise mittels in Stoßdämpferlage 10a oder senkrecht zur Radaufnahme 10b oder dem Achsschenkel positioniertem Linearsensor (Fig. 3) erfolgen.

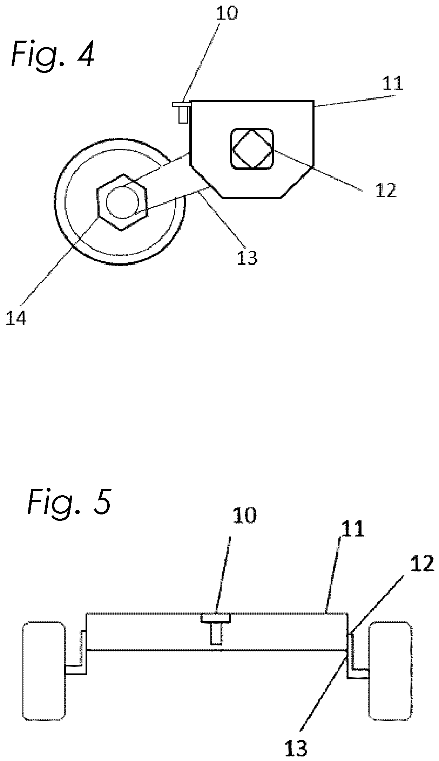

In dem in Fig. 4 ausgeführten Ausführungsbeispiel erfolgt eine kontinuierliche Messung der Einfeder-/Ausfederwegs per Achspositionssensor auf dem Achsdrehpunkt montiert. Die Ermittlung des Achsdrehpunktes und eine entsprechende Überladung kann dabei mittels der Messung des direkten Achsdrehpunktes unter Verwendung von elektrischen Feldsensoren montiert in direkter oder indirekter Achsdrehpunktnähe erfolgen.

In der in Fig. 5 ausgeführten Ausführungsform der Erfindung ist der Sensor 10, 10a, 10b vorzugsweise in etwa mittig am Fahrzeuganhänger im Bereich des Achskörpers 11 montiert.

Der Sensor 10, 10a, 10b kann darüber hinaus vorzugsweise den Federweg der Achse ermitteln, wobei als Indikator der unterhalb des Achskörpers 11 befindliche Boden dient.

Eine weitere Ausführung der Erfindung sieht vor, dass der Sensor 10, 10a, 10b ein optischer Sensor ist.

Die Feststellung der Überladung erfolgt vorzugsweise entweder durch die kontinuierliche Messung des Einfederwegs oder der konsolidierten Achslast des Fahrzeugs oder Punktlast oder der Feststellung eines vordefinierten kritischen Endpunktes mittels eines Sensors in Form eines Bewegungs- und/oder Positionssensors, der vorzugsweise realisiert wird durch entweder Wegsensoren (Achspositionssensor) mit positionsveränderlichem Widerstand in Form von
a) Linearsensoren, montiert in einem Winkel von 0-180° zum Aufnahmedrehpunkt der Radachse an der Karosserie (bei gummigefederten oder Drehfeder-gefederten Achsen) siehe Fig. 3, Sensor 10b, und/oder
b) Linearsensoren, die Ein und -Ausfederweg parallel zum Stoßdämpfer ermitteln (bei Federung mittels Stoßdämpfer und Blattfeder/Einzelradaufhängung), siehe Fig. 3, Sensor 10a, und/oder
c) Linearsensoren an der Achsschenkelaufnahme der Achse, der in einem Winkel zwischen 0 und 180° den Einfederweg misst (bei Drehfeder- oder Gummigefederten Achsen) siehe Fig. 4, und/oder
d) allen anderen Arten von Sensoren, die an der bezeichneten oder in ähnlicher Position befestigt werden, die dazu in der Lage sind die Achsposition oder kritische Über/Unterschreitungen von vordefinierten Positionen zu ermitteln; dazu zählen insbesondere akustische Sensoren wie Ultraschallsensoren, metallische Feldsensoren (NPN/PNP), Solenoide, Magnetsensoren oder Magnetkontakte, optische Sensoren wie Lichtschranken.

Weiterhin erfolgt eine Weiterleitung des Signals in analoger oder digitaler Form an ein digitales Auswertegerät (TCU), welches in der Lage ist entweder mittels Zustandserkennung oder Messwertanalyse den kritischen Zustand des Anhängers zu erkennen und den Überladungszustand an ein zentrales Telemetrie System über ein Funknetz weiterzuleiten.

Die Einbauposition des Sensors ist dabei entweder in Achsschenkelnähe an der Anhängerkarosserie oder Achskörper 11 horizontal (Fig. 1), vertikal montiert am Achskörper 11 selbst (Fig. 2), unmittelbar im Winkel von 0-180° zum Achsschenkel an der Anhängerkarosserie (Fig. 3) oder horizontal zum Achsdrehpunkt am Achskörper 11 selbst (Fig. 4) auszuführen.

Weiterhin gilt die Erfindung auch für die Feststellung der Überladung durch die Signalaufbereitung von digitalen oder analogen Signalen z.B. von vorherig genannter Sensorik durch ein elektronisches Modul, welches durch Abgleich von definierten Sollwerten mit Istwerten und Feststellung von Abweichungen von Normwerten in der Lage ist, eine Überladung des Anhängers festzustellen. Dies ist nicht begrenzt auf die Auswertung von gemessenen Endzuständen, sondern bezieht sich auch auf die Auswertung dynamischer Messwerte während der Fahrt und die Feststellung der Überladung durch Analyse mittels elektronischem Auswertegerät, sofern über die vorhandene Sensorik keine Endzustände ermittelt werden können, die eine Überladung eindeutig erkennen lassen. Dies schließt die Auswertung mittels Cloud-basierter IT-Dienste unter Anwendung von Machine Learning-Algorithmen ebenso ein wie die Anwendung von künstlicher Intelligenz entweder in einem zentralen Dienst oder via Auswertung auf dem lokalen Telemetrie Modul, sofern dieses über entsprechende Auswerteelektronik oder - Intelligenz verfügt.

Die so gemessenen Werte des elektronischen Auswertemoduls werden in Echtzeit unter Nutzung von Funktechnologie (2G/3G/4G/5G/6G, LoRaWan, Narrowband IOT und andere) mittels Mobilfunknetz, Sattelitennetz, Bluetooth oder eine andere funkbasierte Technologie in ein zentrales System weitergeleitet, welches dann die weitere Überwachung des Anhängers zulässt.

Die Feststellung der Überladung kann dabei achsselektiv erfolgen oder durch die Messung von konsolidierten Werten bei mehreren Achsen durch ein Zusatzmodul oder einen zusätzlichen IT-Service (Cloud Service) festgestellt werden.

Ferner ist wichtig zu erläutern, dass Messung und Feststellung der Überladung durch entsprechende Sensorik unabhängig von der Übertragung der Messwerte sind. So können kabelgebundene Sensoren oder solche, die über Funktechnologie (Near Field Communication NFC, RF-ID, Bluetooth oder Bluetooth Low Energy BLE) funktionieren, zum Einsatz kommen. Dies bezieht ebenso die Feststellung über sogenannte iBeacon-Sensoren der Firma Apple Inc. sowie Sensoren nach dem Eddystone-Protokoll der Firma Alphabet/ Google mit ein.

Die Übermittlung der Messwerte bei allen Messmethoden und deren Auswertung wie in Fign. 1-5 beschrieben erfolgt dabei mittels Cloud basiertem Telemetrie System.

### Bezugsziffern liste

- 10: Positionssensor zur Messung der Achsdrehpunktposition
- 10a: Linearsensor zur Messung des Ein-Ausfederweges und der Achsposition in Stoßdämpferlage montiert
- 10b: Linearsensor zur Messung des Ein-Ausfederweges und der Achsposition senkrecht zur Radaufnahme montiert
- 11: Achskörper /Verschraubung an der Karosserie des Anhängers
- 12: Achsdrehpunkt/Lagerung z.B. mit Gummifederung
- 13: Achsschenkel
- 14: Radaufnahme
- A: Achse

## Patentansprüche

1. Fahrzeuganhänger mit einer Ladefläche zur Beförderung von Gütern, einer Zugdeichsel zum Ankuppeln an ein Zugfahrzeug, mindestens einer Achse (A) mit Rädern sowie einem Sensor (10, 10a, 10b) zur Messung und/oder Ermittlung der durch die Ladung auf die Achse des Fahrzeuganhängers wirkenden Achslast, wobei der Fahrzeuganhänger ferner mindestens eine Einrichtung zur Übermittlung des durch den Sensor (10, 10a, 10b) ermittelten Signals umfasst, um dieses Signal an eine digitale Auswerteeinheit zu übermitteln, welche ausgebildet ist, entweder mittels Zustandserkennung oder Messwertanalyse der Achslast einen Überladungszustand des Fahrzeuganhängers zu ermitteln und/oder auszuwerten und den Überladungszustand an mindestens eine Empfangseinheit weiterzuleiten,
**dadurch gekennzeichnet, dass**
der Sensor (10, 10a, 10b) ein Bewegungs- und/oder Positionssensor ist, der ausgebildet ist, eine vertikale Bewegung, Drehung und/oder Rotation
a) der Achse (A) und/oder
b) des Achsdrehpunkts (12) und/oder
c) einer mit der Achse (A) oder dem Achskörper (11) verbundenen, beweglichen, drehenden oder rotierenden Komponente (13, 14) zu erfassen.

2. Fahrzeuganhänger nach Anspruch 1,
**dadurch gekennzeichnet, dass**
der Sensor (10, 10a, 10b) ausgebildet ist, den Achsdrehpunkt (12) durch senkrecht zur Achse (A) oder senkrecht zum Achsschenkel (13) montierten Magnetfeldsensor, Reed-Kontakt, Ultraschallsensor oder anderer elektronischer Näherungssensor zu ermitteln.

3. Fahrzeuganhänger nach Anspruch 1,
**dadurch gekennzeichnet, dass**
der Sensor (10, 10a, 10b) als Magnetfeldsensor diagonal zur Achse (A) oder des Achskörpers (11) montiert in dem Achskörper (11), als Reed-Kontakt, als Ultraschallsensor und/oder als elektronischer Näherungssensor ausgebildet ist, um die Achsschenkelposition zur Ermittlung der zu ermitteln.

4. Fahrzeuganhänger nach Anspruch 3,
**dadurch gekennzeichnet, dass**
der Sensor (10, 10a, 10b) auslöst, sobald der Achsschenkel eine definierte Position erreicht hat.

5. Fahrzeuganhänger nach einem der vorangegangenen Ansprüche, **dadurch gekennzeichnet, dass**
der Sensor (10, 10a, 10b) ausgebildet ist, eine kontinuierliche Messung der Achsposition und/oder eine Feststellung einer Überladung durch die Messung des Ein- und/oder Ausfederweges mittels eines Linearsensors oder durch Messung von definierten Positionen durchzuführen.

6. Fahrzeuganhänger nach Anspruch 5,
**dadurch gekennzeichnet, dass**
der Sensor (10a, 10b) entweder in Stoßdämpferlage mittels Sensor (10a) oder senkrecht zur Achse (A) mittels Sensor (10b) montiert ist und der Sensor (10, 10a, 10b) den Federweg des Stoßdämpfers oder der Achse (A) misst.

7. Fahrzeuganhänger nach einem der vorangegangenen Ansprüche, **dadurch gekennzeichnet, dass**
der Sensor (10, 10a, 10b) ausgebildet ist, eine kontinuierliche Messung des Einfeder-/Ausfederwegs per Achspositionssensor auf dem Achsdrehpunkt montiert durchzuführen.

8. Fahrzeuganhänger nach einem der vorangegangenen Ansprüche, **dadurch gekennzeichnet, dass**
der Sensor (10, 10a, 10b) in etwa mittig am Fahrzeuganhänger im Bereich des Achskörpers (11) montiert ist.

9. Fahrzeuganhänger nach einem der vorangegangenen Ansprüche, **dadurch gekennzeichnet, dass**
der Sensor (10, 10a, 10b) den Federweg der Achse (A) ermittelt, wobei als Indikator der unterhalb des Achskörpers (11) befindliche Boden dient.

10. Fahrzeuganhänger nach einem der vorangegangenen Ansprüche, **dadurch gekennzeichnet, dass**
der Sensor (10, 10a, 10b) ein optischer Sensor ist.
